Europäisches Patentamt

European Patent Office

Office européen des brevets

(19)

(11) Veröffentlichungsnummer: **0 267 181**
**A1**

(12) # EUROPÄISCHE PATENTANMELDUNG

(21) Anmeldenummer: 87890246.9

(22) Anmeldetag: 04.11.87

(51) Int. Cl.⁴: **E 21 D 9/10**
**G 05 D 1/03**

(30) Priorität: 07.11.86 AT 2975/86

(43) Veröffentlichungstag der Anmeldung:
**11.05.88 Patentblatt 88/19**

(84) Benannte Vertragsstaaten: **DE FR GB IT**

(71) Anmelder: **VOEST-ALPINE Aktiengesellschaft**
**Turmstrasse 44**
**A-4020 Linz (AT)**

(72) Erfinder: **Steinbrucker, Gerhard, Dipl.-Ing.**
**Bessemerstrasse 30**
**A-8740 Zeltweg (AT)**

**Schellenberg, Eduard, Dipl.-Ing.**
**Liebermannweg 32**
**A-4020 Linz (AT)**

**Zitz, Alfred**
**Granitzenweg 13b**
**A-8740 Zeltweg (AT)**

(74) Vertreter: **Kretschmer, Adolf, Dipl.-Ing. et al**
**Patentanwälte Dipl.Ing. A. Kretschmer Dr. Thomas M.**
**Haffner Schottengasse 3a**
**A-1014 Wien (AT)**

(54) **Einrichtung zum Erfassen der Position einer Schrämmaschine.**

㉗ Zum Erfassen der Position einer Schrämmaschine (1) ist eine Mehrzahl von Lichtquellen (2,3,4) an der Schrämmaschine (1) angeordnet. Ein Sensor (8), welcher in der Strecke positioniert ist, enthält eine Abbildungsoptik (9) und erfaßt die Koordinaten der Abbildung der Lichtquellen in der Bildebene. Die Auswertung dieser Koordinaten ergibt die Position der Schrämmaschine (1).

FIG.1

EP 0 267 181 A1

**Beschreibung**

## Einrichtung zum Erfassen der Position einer Schrämmaschine

Die Erfindung bezieht sich auf eine Einrichtung zum Erfassen der Position einer Schrämmaschine mit wenigstens einem Sender für elektromagnetische Wellen an der Schrämmaschine und wenigstens einem in der Strecke positionierten Empfänger für elektromagnetische Wellen sowie einer Auswerteschaltung für die empfangenen Signale.

Aus der DE-PS 26 40 662 ist ein Verfahren zur Steuerung der Bewegung einer Vortriebsmaschine in untertägigen Flözstrecken zu entnehmen, wobei die unterschiedliche Reflexion eines Lichtstrahles über die Oberfläche eines Abbaustoßes fotoelektrisch gemessen wird und der Farbunterschied der Abbaumineralien und des Begleitgesteins als optische Kenngrößen festgestellt werden. Durch das entstehende Signal wird die Richtung des Abbauflözes bestimmt und es wird die Vortriebsmaschine entsprechend der festgestellten Richtung des Abbauflözes bewegt.

Für die Erfassung der Position einer Schrämmaschine, insbesondere des Seiten- und Höhenversatzes, des Rollwinkels, des Nickwinkels oder des Gierwinkels relativ zu einem Sollprofil sind eine Reihe von Einrichtungen bekanntgeworden, welche zumeist unter Verwendung von Laserstrahloptiken arbeiten. Es ist weiters bereits bekannt, komplexe Sensorbauteile, welche einem Streckenleitstrahl zu folgen in der Lage sind, an einer Schrämmaschine anzubringen, welche je nach Position der Maschine verschoben bzw. geneigt werden können, um in eine mit dem Streckenleitstrahl fluchtende Position gebracht zu werden. Aus der relativen Verschiebung bzw. Neigung derartiger Sensorelemente lassen sich die geforderten Positionsdaten ermitteln.

Aus der DE-OS 24 27 816 ist eine Einrichtung zur Begrenzung der Verstellbewegung eines an einem Schwenkarm einer Vor triebsmaschine gelagerten Lösewerkzeuges bekanntgeworden, wobei der Streckenquerschnitt durch einen in Tunnellängsrichtung verlaufenden Laserstrahl durch eine Schablone festgelegt wird, die von einer Reflexionslichtschranke abgetastet wird. Die Stellung des Schrämwerkzeuges relativ zur Vortriebsmaschine wird dabei über Winkelkodierer erhalten, wobei für die Bestimmung der Abweichungen der Schrämmaschine aus der Horizontalen Kreiselsysteme vorgesehen sind. Über die Signale der Winkelkodierer und der Kreiselsysteme werden ständig die Koordinaten der Reflexionslichtschranke errechnet und mit dem von der Schablone begrenzten Streckenquerschnitt verglichen, wodurch der Aktionsbereich des Schrämarmes und der damit verbundenen Schrämwalze auf den herzustellenden Streckenquerschnitt begrenzt wird. Bei der aus der FR-PS 25 59 541 bekanntgewordenen Einrichtung und dem Verfahren zur Bestimmung der Position eines Schrämarmes einer Schrämmaschine wird in Streckenlängsrichtung ein Laserstrahl in Form eines Polygonzuges geführt, wobei zumindest der letzte Abschnitt des Polygonzuges auf einem am Schrämarm der Schrämmaschine angeordnete Punkt endet.

Die Verwendung von Laserstrahlen bei derartigen Einrichtungen ermöglicht zwar relativ große Reichweiten, jedoch sind die bekannten Einrichtungen zumeist relativ komplex und dadurch störanfällig. Für die Erfassung der Position von Schrämmaschinen über einen kürzeren Bereich der Strecke sind daher entsprechend vereinfachte Einrichtungen vorgeschlagen worden, deren Störanfälligkeit geringer ist. Beispielsweise wurde in der AT-PS 375 153 bereits die Verwendung von Wärmebildkameras zur Abbildung der Position von heißen Maschinenteilen oder Infrarotstrahlenquellen an der Maschine vorgeschlagen. Weiters wurde in der AT-PS 355 533 bereits vorgeschlagen, eine Mehrzahl von Antennen an einer Schrämmaschine in vorgegebener geometrischer Position verteilt anzuordnen und aus Laufzeitdifferenzen von Signalen durch trigonometrische Berechnungen die Position einer Schrämmaschine zu ermitteln. Derartige Antennen ebenso wie die aufwendigeren orientierbaren Sensoren einer Maschine sind den Erschütterungen der Maschine ausgesetzt oder weisen relativ große Baumaße auf.

Die Erfindung zielt nun darauf ab, eine besonders einfache und funktionssichere Ausbildung einer derartigen Einrichtung zu schaffen, bei welcher mit einem Minimum an Platzbedarf an der Maschine eine möglichst vollkommene Beschreibung der Position der Schrämmaschine in der näheren Umgebung, insbesondere in einem Bereich zwischen 1 und 100 m von einem Positionssensor ermöglicht wird.

Ausgehend von einer bekannten Einrichtung der eingangs genannten Art, besteht die Erfindung im wesentlichen darin, daß die Sender von einer Mehrzahl von mit vorgegebener Geometrie verteilten Lichtquellen an der Schrämmaschine und der Empfänger als Sensor zum Abbilden der Lichtquellen und Erfassen der Koordinaten der Abbildung in der Bildebene ausgebildet sind. Durch die räumliche Geometrie der Anordnung der Lichtquellen ergibt sich in der Bildebene des Sensors eine je nach Lage der Maschine unterschiedliche Distanz der Koordinaten der Bildpunkte, aus welcher unmittelbar die Lage der Maschine ermittelt werden kann. Bevorzugt ist hiebei eine Anordnung bei welcher wenigstens drei Lichtquellen in voneinander verschiedenen, die Maschinenlängsachse schneidenden, Querschnittsebenen angeordnet sind. Bei einer Beschränkung auf drei Lichtquellen können aber immer noch mehrdeutige Abbildungen entstehen und es kann erforderlich sein, eine von zwei möglichen Interpretationen der sich ergebenden Abbildung durch zusätzliche Überlegungen, beispielsweise die Unwahrscheinlichkeit von plötzlichen weitgehenden Lageänderungen, auszuscheiden. Eine weitgehend eindeutige Interpretation einer optischen Abbildung in der Ebene läßt sich jedoch bereits dann sicherstellen, wenn, wie es einer bevorzugten Weiterbildung entspricht, vier an den Ecken eines Tetraeders angeordnete Lichtquellen mit der Schrämmaschine verbunden sind.

Eine besonders leichte Zuordnung von einzelnen Lichtquellen der Schrämmaschine zu Punkten der Abbildung im Sensor kann dadurch erreicht werden, daß jede Lichtquelle mit einem Modulator zur unterschiedlichen Modulation der Lichtquellen verbunden ist und daß der Sensor mit einem Decoder zur Zuordnung der unterschiedlichen Modulation der Lichtquellen zu Meßpunkten in der Bildebene des Sensors verbunden ist. Dadurch, daß jede Lichtquelle mit einem Modulator zur unterschiedlichen Modulation der Lichtquellen verbunden ist, können alle von Lichtquellen gebildeten Meßpunkte der Schrämmaschine gleichzeitig in Betrieb bleiben, so daß der Aufwand für eine Synchronisierung in der Auswertung, wie er bei sequentieller Schaltung der Lichtquellen erforderlich wäre, entfällt. Die Gefahr von Fehlerkennungen, wie sie bei einer Störung der Synchronisation möglich wäre, entfällt bei gleichzeitigem Betrieb aller Lichtquellen und dadurch, daß die Lichtquellen unterschiedlich modulierte Lichtstrahlung aussenden, kann die gesonderte und gleichzeitige Auswertung aller Abbildungspunkte durch einfache elektronische Bauteile ermöglicht werden. Die Information über die Position der Schrämmaschine selbst kann in Kenntnis der Schwenkstellung eines Schrämarmes unmittelbar zur Profil- und Richtungssteuerung herangezogen werden.

Während bei sequentieller Schaltung der Lichtquellen die eindeutige Zuordnung der einzelnen Lichtquellen zu den ausgewerteten Meßpunkten in der Bildebene nur bei vollständiger Synchronisation möglich ist und bei Fehlern in der Zuordnung Fehlinformationen über die tatsächliche Position der Schrämmaschine möglich sind, lassen sich bei gleichzeitiger Strahlung aller Lichtquellen der Maschine auch bei sehr geringer Anzahl von Lichtquellen, beispielsweise von an den Eckpunkten eines Tetraeders angeordneten Lichtquellen, eindeutige Zuordnungen sicherstellen, welche eine Fehlinterpretation verhindern. Da gleichzeitig alle Lichtquellen leuchten, können Anordnungen durch die Auswerteelektronik ausgeschieden werden, welche aus technischen Gründen nicht in Frage kommen, so daß die Anzahl der Meßpunkte verringert werden kann. Die Auswertung kann nach den Methoden der sogenannten "pattern recognition" erfolgen, wobei aus der Maschinenkontur bzw. der erkannten Anordnung der Lichtpunkte ein vollständiges Bild der Maschine erzeugt werden kann. Eine derartige perspektivische Maschinendarstellung läßt unmittelbar die Ermittlung von Positionsdaten zu. Die Meßpunkte können mit einer relativ einfachen für Lichtoptik ausgelegten Kamera abgebildet werden und die Zuordnung unterschiedlich modulierter Signale läßt sich durch konventionelle Decoder, wie sie aus Fernsteuerschaltungen bekannt sind, sicher erzielen.

In besonders einfacher Weise ist die Ausbildung so getroffen, daß der Modulator als Zerhacker ausgebildet ist und daß der Decoder den Zerhackerfrequenzen entsprechende Filter bzw. Frequenzweichen enthält.

Um an der Maschine mit einem Minimum an Bauteilen auszukommen kann mit Vorteil die Anordnung so gewählt sein, daß die Frequenzen unterschiedlich modulierter Lichtquellen in ganzzahligem Vielfachen zueinander gewählt werden, wobei die Frequenzen für die unterschiedlich modulierten Lichtquellen von dem gleichen Zerhacker durch entsprechende Frequenzverdopplungsschaltungen abgeleitet werden können.

Die Verwendung von Glühlampen als Lichtquellen kann auf Grund der Maschinenerschütterungen noch zu unerwünschten Überlagerungen in der Modulation der Signale führen. Besonders vorteilhaft ist daher im Rahmen der erfindungsgemäßen Einrichtung, daß die Lichtquellen von fokussierten Laserdioden gebildet sind.

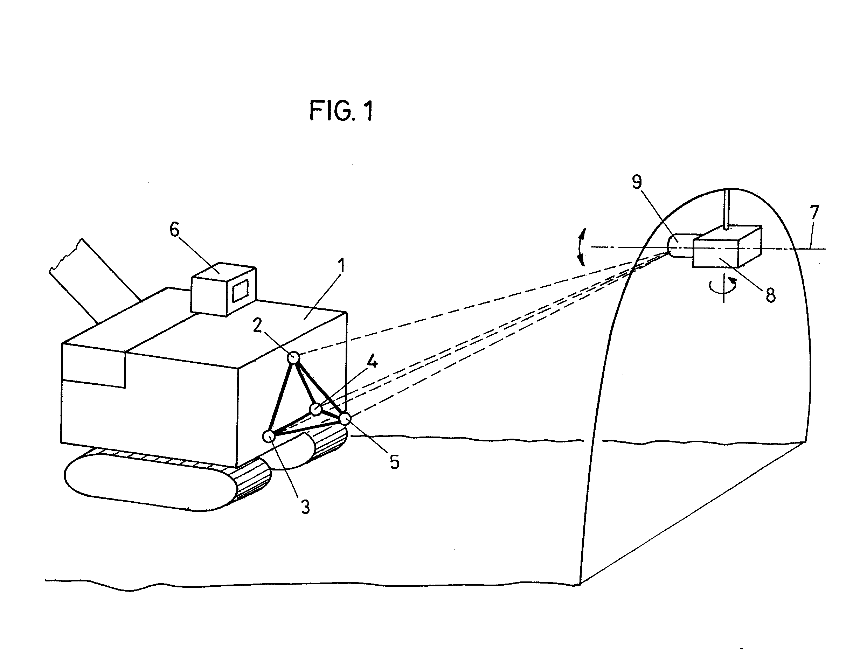

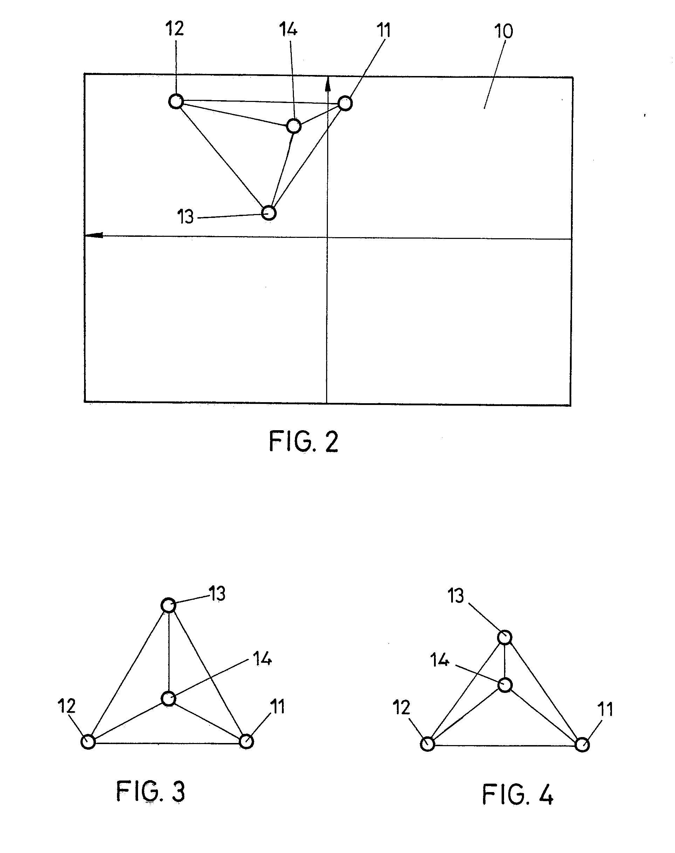

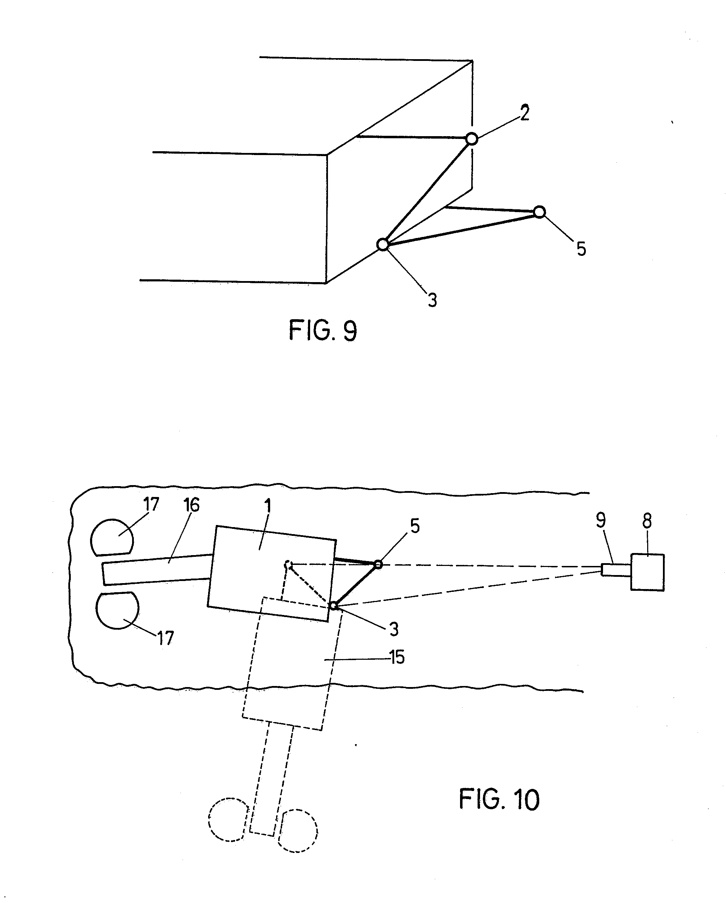

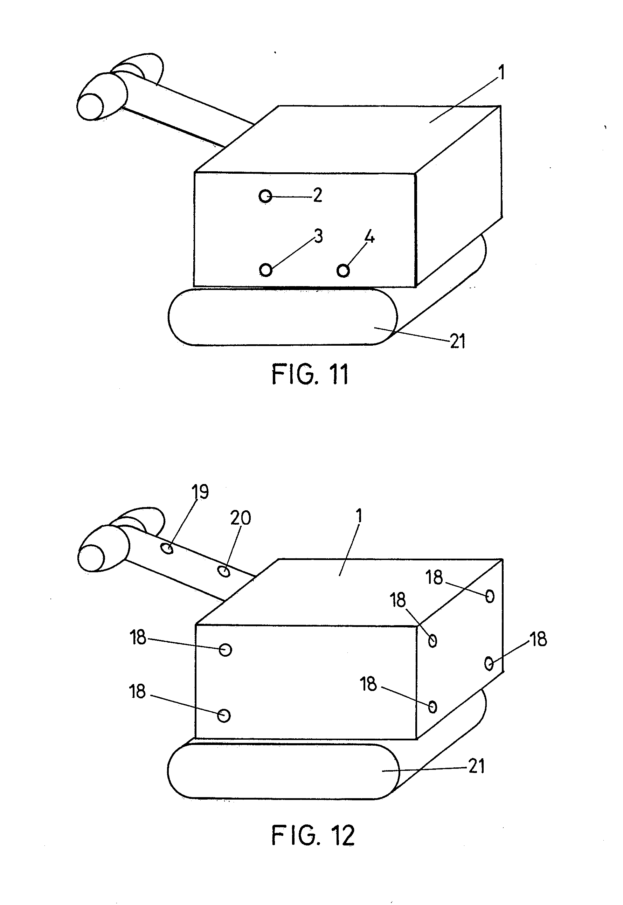

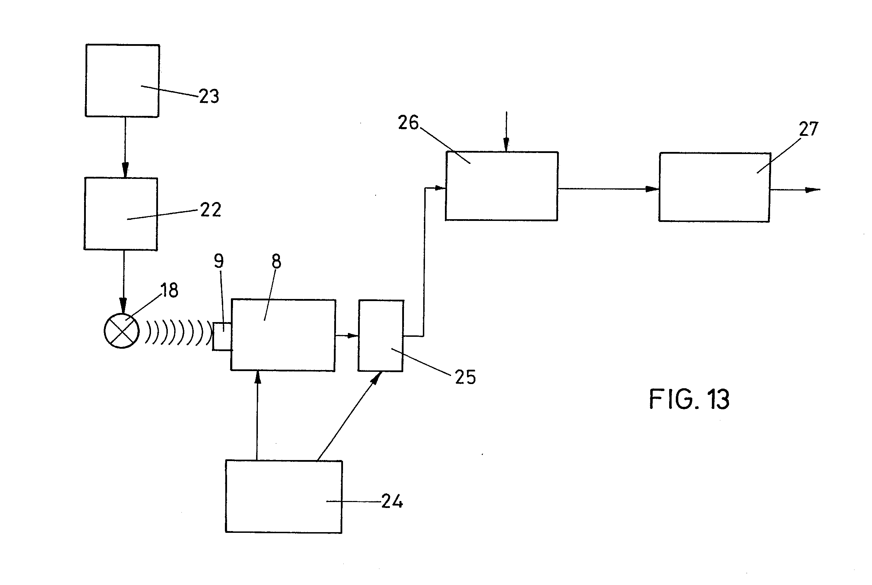

Die Erfindung wird nachfolgend an Hand von in der Zeichnung dargestellten Ausführungsbeispielen näher erläutert. In dieser zeigen Fig.1 eine perspektivische Darstellung der Anordnung eines Positionssensors in der Strecke und der Anordnung von Lichtquellen an einer Vortriebsmaschine, Fig.2 eine vergrößerte Darstellung der Abbildung in der Bildebene des Positionssensors bei Messung der Meßpunkte einer Einrichtung nach Fig.1, die Fig.3 bis 8 unterschiedliche Abbildungen für unterschiedliche Maschinenpositionen, wie sie entsprechend Fig.2 als Abbildung im Positionssensor entstehen, Fig.9 eine Anordnung von nur drei Lichtquellen am Hinterende einer Maschine und Fig.10 eine Draufsicht auf eine Anordnung gemäß Fig.9 mit in der Strecke positioniertem Sensor, Fig.11 eine Anordnung von drei Lichtquellen seitlich an der Maschine, Fig.12 die Anordnung einer Mehrzahl von Lichtpunkten an der Maschine und am Schrämarm einer Maschine, Fig.13 eine schematische Darstellung der elektrischen Schaltungsanordnung für eine Einrichtung nach den Fig.1 bis 12 und Fig.14 ein Detail der Schaltungsanordnung für die Zuordnung der einzelnen Meßpunkte zu einzelnen Lichtquellen.

In Fig.1 ist eine Vortriebsmaschine 1 ersichtlich, welche an ihrem hinteren Ende an den Eckpunkten eines Tetraeders angeordnete Lichtquellen 2, 3, 4 und 5 aufweist. Die Vortriebsmaschine 1 weist darüberhinaus einen schematisch dargestellten Monitor 6 für die Darstellung der erzielten Abbildung auf.

In der Strecke ist ortsfest und gegenüber dem Streckenleitstrahl 7 orientiert ein Sensor 8 angeordnet, dessen Position entsprechend auf den gewünschten Meßwinkel eingestellt werden kann. Der Positionssensor 8 kann somit geneigt und gedreht werden um der Maschine zu folgen. Der Positionssensor 8 weist eine Abbildungsoptik 9 auf, welche die von den Lichtquellen 2, 3, 4 und 5 ausgehenden Strahlen in der Bildebene abbildet.

Die auf diese Weise erzeugte Abbildung ist in Fig.2 dargestellt. In der Bildebene 10 sind die den Lichtquellen entsprechenden Meßpunkte 11, 12, 13 und 14 ersichtlich, wobei der Meßpunkt 11 der Lichtquelle 3, der Meßpunkt 12 der Lichtquelle 4, der Meßpunkt 13 der Lichtquelle 3 und der Meßpunkt 14 der Lichtquelle 5 entspricht. Bei dieser Abbildung muß darüberhinaus berücksichtigt werden, daß auf Grund der Abbildungsoptik 9 ein seitenverkehrtes kopfstehendes Bild erzielt wird.

Die Auswertung der einzelnen Meßpunkte 11 bis 14 erfolgt nun in der Weise, daß die jeweiligen Koordinaten des Meßpunktes ermittelt werden. Je nach Art der Abbildung lassen sich aus derartigen Signalen unterschiedliche Aussagen gewinnen. Im einzelnen sind unterschiedliche Konfigurationen in den Fig.3 bis 8 angedeutet, wobei in Fig.3 die Normalposition angedeutet ist, bei der die Achse der Abbildungsoptik mit der Höhe des Tetraeders fluchtet. Bei einer Nickbewegung der Schrämmaschine nach vorne ergibt sich die Darstellung nach Fig.4, bei welcher der Meßpunkt 14 relativ zur von den übrigen Meßpunkten aufgespannten Ebene verschoben ist. Ein Gieren nach links ist durch die schematische Darstellung nach Fig.5 angedeutet, wobei, wenn gleichzeitig mit einem derartigen Gieren nach links ein Nicken nach vorne beobachtet wird, die Darstellung nach Fig.6 als Abbildung resultiert.

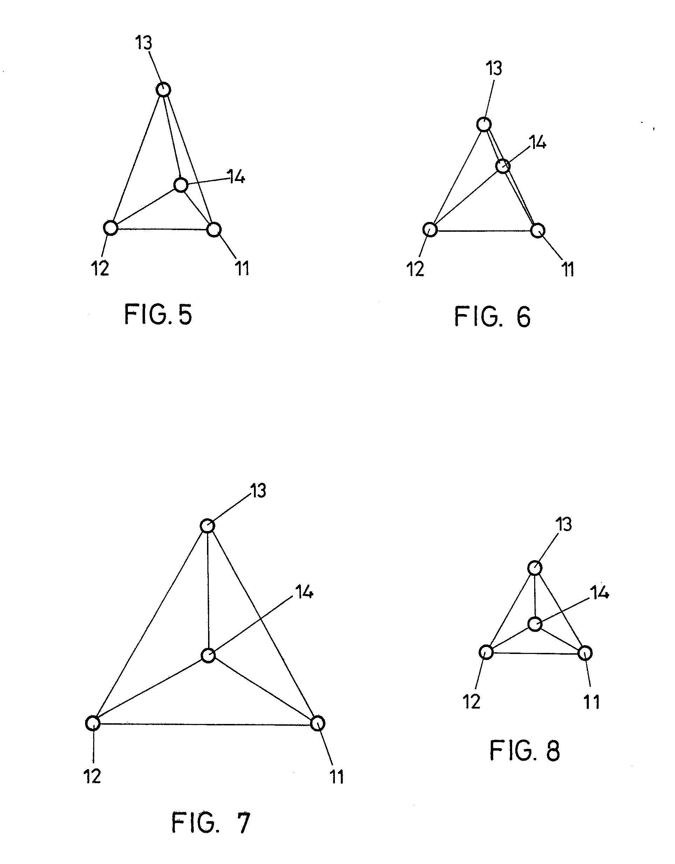

Eine Information über die Entfernung der Maschine läßt sich entsprechend den Darstellungen nach Fig.7 und 8 auf Grund der Größe der Abbildung herleiten, wobei in Fig.7 auf Grund der vergrößerten Abbildung die Schrammaschine näher dem Positionssensor orientiert ist als bei der Abbildung nach Fig.8, welche zu einer kleineren Abbildung führt.

Bei der Darstellung nach Fig.9 wird nun mit einer verringerten Anzahl von Lichtquellen gearbeitet, wobei nunmehr nur noch die Lichtquellen 2, 3 und 5 vorgesehen sind. Auf Grund der gewählten Konfiguration der Lichtquellen läßt sich, wie aus Fig.10 ersichtlich, nicht immer eine eindeutige Aussage unmittelbar aus der Abbildung erschließen. Die Abbildung könnte prinzipiell zwei Positionen entsprechen, wobei die strichliert angedeutete zweite Position 15 der Schrämmaschine 1 jedoch als technisch unmöglich ausgeschieden werden kann. Auch bei dieser Verringerung der Anzahl der Lichtquellen läßt sich somit eine eindeutige Positionsaussage gewinnen.

Bei der Darstellung in Fig.10 ist der Schrämarm 16 mit den am freien Ende des Schrämarmes rotierbar gelagerten Schrämköpfen 17 schematisch angedeutet.

Weitere Möglichkeiten für die Anordnung von Lichtquellen an der Schrämmaschine ergeben sich aus den Darstellungen nach Fig.11 und 12. Bei der Darstellung nach Fig.11 weist die Schrämmaschine 1 seitlich drei Lichtquellen 2, 3 und 4 auf, wohingegen bei der Darstellung nach Fig.12 zusätzlich zu den Lichtquellen 18 am Schrämmaschinenrahmen Lichtquellen 19 und 20 am Schrämarm selbst vorgesehen sind. Die zusätzlichen Lichtquellen 19 und 20 am Schrämarm ermöglicht die Miterfassung der Schwenklage des Schrämarmes relativ zum Maschinenrahmen ohne daß hiefür gesonderte Winkelkodierer oder Meßeinrichtungen an der Maschine selbst erforderlich sind. Das Raupenfahrwerk der Schrämmaschine ist in den Fig.11 und 12 schematisch mit 21 angedeutet.

Wie aus Fig.13 ersichtlich ist, werden die einzelnen Lichtquellen von einem Modulator 22 mit Energie einer vorgegebenen Frequenz versorgt, wobei die Energieversorgung mit 23 angedeutet ist. Die Lichtquelle selbst kann eine dem Einsatzfall angepaßte Lichtquelle sein, wobei in besonders vorteilhafter Weise eine Laserdiode als Lichtquelle gewählt werden kann. Die Lichtquelle ist in Fig.13 mit 18 bezeichnet und kann naturgemäß eine beliebige der in den Fig.1 bis 12 genannten Lichtquellen sein. Wesentlich ist hiebei nur, daß jede der einzelnen verschiedenen Lichtquellen mit Energie verschiedener Modulation versorgt sind, um eine Kennung der einzelnen Lichtquellen zu ermöglichen. Der Positionssensor 8 mit seiner Abbildungsoptik 9 ist nun mit einer Frequenzweichensteuerung 24 verbunden, welche die Zuordnung der einzelnen Meßpunkte des Positionssensors zu den einzelnen Lichtquellen ermöglicht. Die Koordinaten der Meßpunkte werden durch die Schaltungsanordnung 25 geliefert, wobei jedem Meßpunkt über die Frequenzweichensteuerung 24 auch eine Kennung der Lichtquelle mitgegeben ist. Die dadurch erhaltenen Signale können über Kabel oder Funk an eine Auswerteelektronik 26 weitergeleitet werden, welche die Abstände der Lichtquellen voneinander und damit die Maschinenparameter ergibt. Die Signale einer derartigen Auswerteelektronik können einer Anzeigeeinrichtung 27 zugeführt sein oder aber unmittelbar für die Profil- und Richtungssteuerung der Schrämmaschine herangezogen werden.

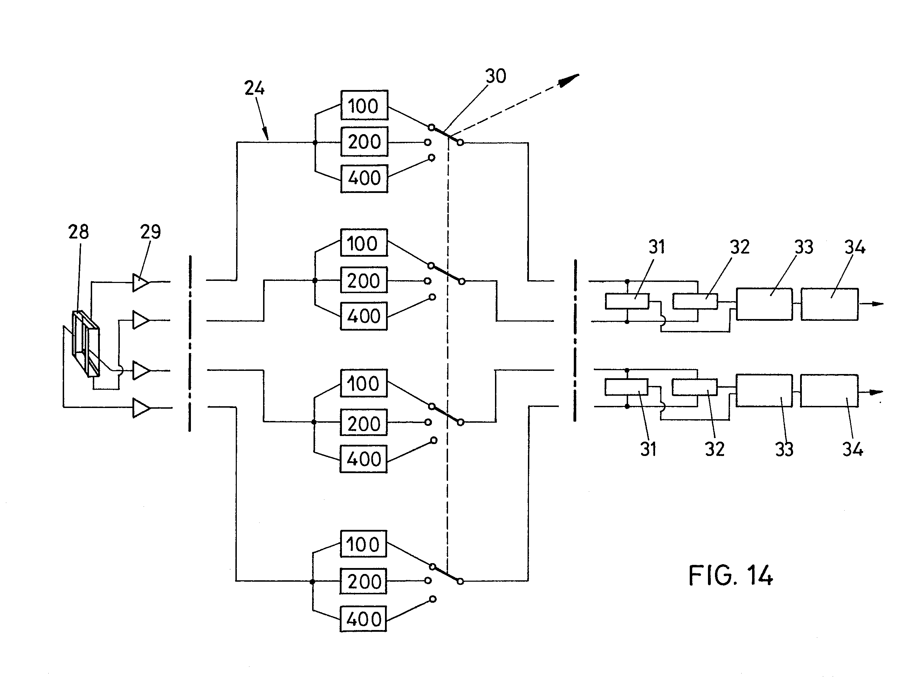

Die Details der Kennung der einzelnen Lichtquelle sind in Fig.14 schematisch dargestellt. Das im Positionssensor 8 enthaltene Sensorelement 28, welches die Koordinatenerfassung der Messung ermöglicht, ist über Vorverstärker mit der Frequenzweichensteuerung 24 verbunden. Diese enthält Filter für die einzelnen gewählten Modulationsfrequenzen und einen Multiplexer 30, worauf die mit Kennung versehenen Signale der Sensorelektronik 31 zugeführt werden können. In der Sensorelektronik werden die Koordinatensignale in Additionsschaltungen 31 und Subtraktionsschaltungen 32 weiterverarbeitet, um auf diese Weise die Hintergrundstörungen eliminieren zu können. Eine entsprechende Kompensationsschaltung ist mit 33 schematisch angedeutet. Die Division der beiden Signale in einer Divisionsschaltung 34 ergibt unmittelbar Signale für die Y-Achse und für die X-Achse und damit eine exakte Ermittlung der Position der Meßpunkte unter Berücksichtigung der Kennung der jeweiligen Lichtquelle auf Grund der vorgeschalteten Frequenzweichensteuerung 24.

Die Modulation wird bei dieser Anordnung durch einen Zerhacker erzielt, dessen Zerhackerfrequenz jeweils den Filterfrequenzen entspricht. Es sind jeweils drei verschieden modulierte Lichtquellen vorgesehen, wobei die Zerhackerfrequenz durch Frequenzverdopplung für unterschiedliche Lichtquellen gebildet wird. Auf Grund des gewählten Sensors sind vier Kanäle vorgesehen, wobei in jedem Kanal durch Zuordnung des entsprechenden Filters die Einstellung auf die zu messende Lichtquelle erfolgt.

**Patentansprüche**

1. Einrichtung zum Erfassen der Position einer Schrämmaschine (1) mit wenigstens einem Sender für elektromagnetische Wellen an der Schrämmaschine und wenigstens einem in der Strecke positionierten Empfänger (8) für elektromagnetische Wellen sowie einer Auswerteschaltung (26) für die empfangenen Signale, dadurch gekennzeichnet, daß die Sender von einer Mehrzahl von mit vorgegebener Geometrie verteilten Lichtquellen (2, 3, 4, 5, 18, 19, 20) an der Schrämmaschine (1) und der Empfänger (8) als Sensor zum Abbilden der Lichtquellen und Erfassen der Koordinaten der Abbildung in der Bildebene (10) ausgebildet sind.

2. Einrichtung nach Anspruch 1, dadurch gekennzeichnet, daß jede Lichtquelle (2, 3, 4, 5, 18, 19, 20) mit einem Modulator (22) zur unterschiedlichen Modulation der Lichtquellen verbunden ist und daß der Sensor (8) mit einem Decoder (24) zur Zuordnung der unterschiedlichen Modulation der Lichtquellen (2, 3, 4, 5) zu Meßpunkten (11, 12, 13, 14) in der Bildebene des Sensors verbunden ist.

3. Einrichtung nach Anspruch 1 oder 2, dadurch gekennzeichnet, daß der Modulator (22) als Zerhacker ausgebildet ist und daß der Decoder (24) den Zerhackerfrequenzen entsprechende Filter bzw. Frequenzweichen enthält.

4. Einrichtung nach einem der Ansprüche 1, 2 oder 3, dadurch gekennzeichnet, daß die Frequenzen unterschiedlich modulierter Lichtquellen (2, 3, 4, 5, 18, 19, 20) in ganzzahligem Vielfachen zueinander gewählt werden.

5. Einrichtung nach einem der Ansprüche 1 bis 4, dadurch gekennzeichnet, daß die Lichtquellen (2, 3, 4, 5, 18, 19, 20) von fokussierten Laserdioden gebildet sind.

6. Einrichtung nach einem der Ansprüche 1 bis 5, dadurch gekennzeichnet, daß wenigstens drei Lichtquellen (2, 3, 4, 5, 18, 19, 20) in voneinander verschiedenen, die Maschinenlängsachse schneidenden, Querschnittsebenen angeordnet sind.

7. Einrichtung nach einem der Ansprüche 1 bis 6, dadurch gekennzeichnet, daß vier an den Ecken eines Tetraeders angeordnete Lichtquellen (2, 3, 4, 5) mit der Schrämmaschine (1) verbunden sind.

# FIG. 1

0267181

FIG. 2

FIG. 3

FIG. 4

0267181

FIG. 5

FIG. 6

FIG. 7

FIG. 8

0267181

FIG. 9

FIG. 10

0267181

FIG. 11

FIG. 12

0267181

FIG. 13

0267181

FIG. 14

| | Europäisches Patentamt | EUROPÄISCHER RECHERCHENBERICHT | Nummer der Anmeldung |
|---|---|---|---|
| | | | EP 87 89 0246 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A-2 005 950 (THE SECRETARY OF STATE FOR INDUSTRY) * Ansprüche 1-15; Figuren 1,2,4 * | 1,6,7 | E 21 D 9/10 G 05 D 1/03 |
| Y | | 5 | |
| A | | 2-4 | |
| Y | US-A-4 482 960 (PRYOR) * Spalte 2, Zeile 65 - Spalte 3, Zeile 8; Figur 1 * | 5 | |
| A | | 1 | |
| A | GB-A-2 014 633 (VOEST-ALPINE) & AT-B-355 533 (Kat. D) | | |

RECHERCHIERTE SACHGEBIETE (Int. Cl.4)

E 21 D
E 21 C
E 21 F
E 02 F
G 05 D

Der vorliegende Recherchenbericht wurde für alle Patentansprüche erstellt

| Recherchenort | Abschlußdatum der Recherche | Prüfer |
|---|---|---|
| DEN HAAG | 12-01-1988 | RAMPELMANN J. |

EPO FORM 1503 03.82 (P0403)